# EUROPEAN PATENT SPECIFICATION

(11) **EP 4 125 498 B1**
(45) Date of publication and mention of the grant of the patent: **20.03.2024**
(21) Application number: 21716618.0
(22) Date of filing: 26.03.2021
(51) Int. Cl.: A47B 47/03, F16B 12/30, A47B 13/06, A47B 47/05, F16B 12/42, F16B 12/50, A47C 1/12, E04H 3/12, A47B 31/00, A47B 83/00

(54) **A FURNITURE MODULE ASSEMBLY FOR INTERACTIVE LEARNING**
MÖBELMODULANORDNUNG FÜR INTERAKTIVES LERNEN
ENSEMBLE MODULE DE MEUBLE POUR APPRENTISSAGE INTERACTIF

(30) Priority: 01.04.2020 DK PA202070203
(43) Date of publication of application: 08.02.2023
(73) Proprietor: Environment for Learning, 8600 Silkeborg (DK)
(72) Inventor: ENGEBORG, Lars, 8600 Silkeborg (DK)
(74) Representative: Kanved, Nicolai
(86) International application number: PCT/EP2021/057891
(87) International publication number: WO 2021/198059

(56) References cited:
- EP-A1- 0 144 471
- CH-B1- 699 151
- KR-U- 20100 003 822
- US-B1- 6 247 869

## Description

### FIELD OF THE INVENTION

The present invention relates to the field of furniture suitable for interactive learning environments. In particular, the invention relates to furniture constructed of building block modules that may be formed into different interactive furniture learning configurations.

### BACKGROUND OF THE INVENTION

Traditionally, furniture learning environments in schools and institutions have been established as complete solutions tailored to the specific physical requirements of the location where they are to be used. Although these furniture learning environments may provide beneficial solutions for interactive learning, the furniture is often associated with heavy installation requirements and lack of flexibility in changing environments.

It is known that some learning projects may require one learning environment, while some other projects may require another learning environment to optimize conditions for learning. Particularly, some learning projects may require a high degree of silent learning, while other learning projects may require a higher degree of interaction. Also, changing environments for interactive learning may optimize learning yield.

KR 2010 0003822 U describes a furniture module for building furniture assemblies. Specifically, this document relates to a connecting structure of prefabricated frames, and more particularly to linear frames to be assembled to each other through a relatively easy assembly manner. However, the corners of the frames may be subject to stability issues.

Accordingly, there is a need for furniture learning environments that allow flexibility and are easy to convert into different configurations based on different learning situations.

### SUMMARY OF THE INVENTION

The present invention pertains to furniture modules for building of interactive furniture learning module assemblies as well as module assemblies as such without the drawbacks of known interactive furniture.

In one aspect there is provided a furniture module for building of interactive furniture learning module assemblies according to claim 1.

In a second aspect there is provided a furniture module assembly for providing an interactive learning environment, the assembly comprising at least two connected modules. Assemblies may be built of more than two modules depending on the requirements in the learning environment.

One of the advantages of the module according to the invention is that it may readily be used as a building block for construction of module assemblies that accommodate the need for changing furniture learning environments and are easy to convert into different configurations based on different learning situations. At the same time, the modules and assembly as such is made in a way that optimizes security and requirements to furniture for use in schools and institutions.

A particular advantage is that the module is configured with dimensions that accommodate easy mounting to neighbour modules, such that the building blocks fit in the most appropriate way in a module assembly construction and address various purposes. For instance, the width of the module is substantially half the hight of the module, which gives advantageous options for configuring a module assembly.

A further particular advantage is that the skeleton of construction of each module allows mounting of plates to one or more sides of the module. This both improves the overall weight load of the assembly and at the same time improves the weight load during construction of the assembly, which again benefits flexibility of the system. The building flexibility is also improved considerably with the use of both triangular frame brackets and angle fittings that both serves stability of the system and mounting of plates.

In a third aspect the furniture module assembly is in form of a stair comprising one or more horizontal positioned modules (2) and one or more vertical positioned modules (3).

In a fourth aspect the furniture module assembly is in form of a high module assembly comprising at least a pair of two or more vertical positioned modules on top of another.

In the present context, a "high module assembly" is intended to mean that two modules are positioned with the longest dimensions on top of each other in a vertical direction. Importantly, the above described assembly is only one option for configuring a high module assembly. Such a high module assembly may comprise further modules side-by-side and/or may be higher than two modules, such as three modules.

### DESCRIPTION OF DRAWINGS

The invention will be understood in greater detail with reference to the following figures that serve to illustrate certain particular embodiments of the invention by way of example:

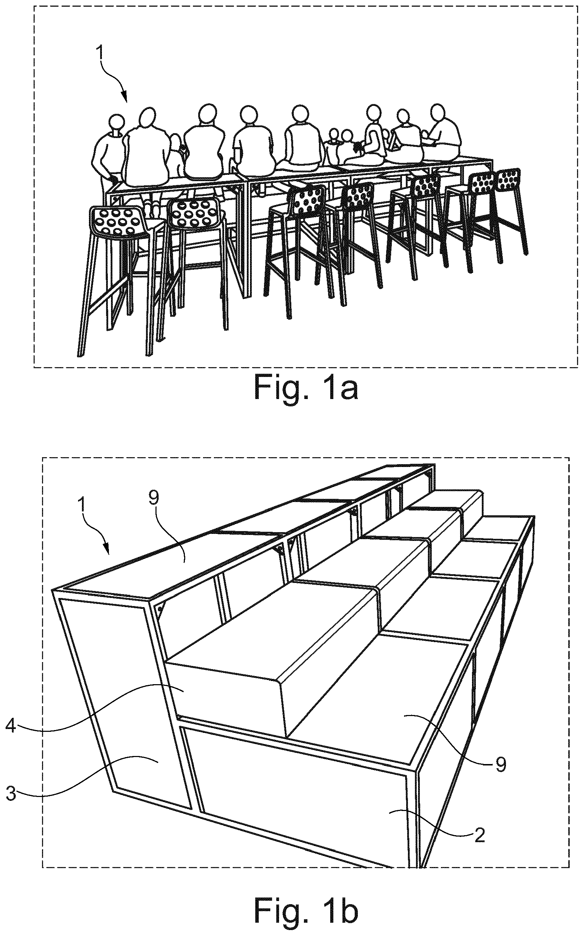

Fig. **1a** is a stair according to the invention seen from the back side where the upper plate is used as a seat and may also be used as a table.
Fig. **1b** is a stair according to the invention seen in perspective from the front.

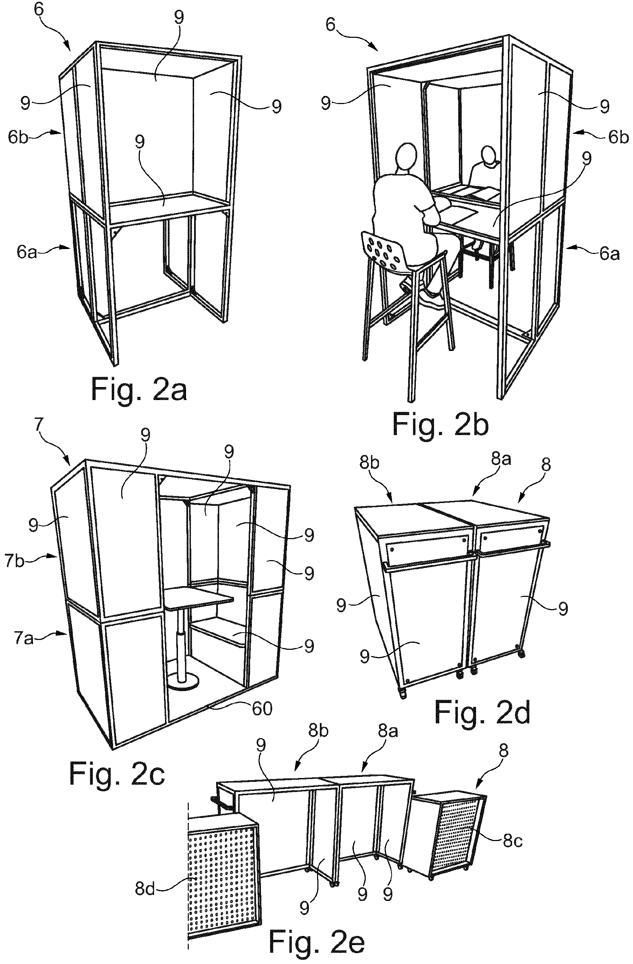

Fig. **2a** and Fig. **2b** are high module assemblies according to the invention seen in perspective from one front side.
Fig. **2c** is high module assembly according to the invention configured with a table in the middle and two seats on each side of the table.
Fig. **2d** and Fig. **2e** is a workshop trolley on wheels build of two modules according to the invention with two connected movable workshop members to be hidden inside when the two modules are closed against each other.

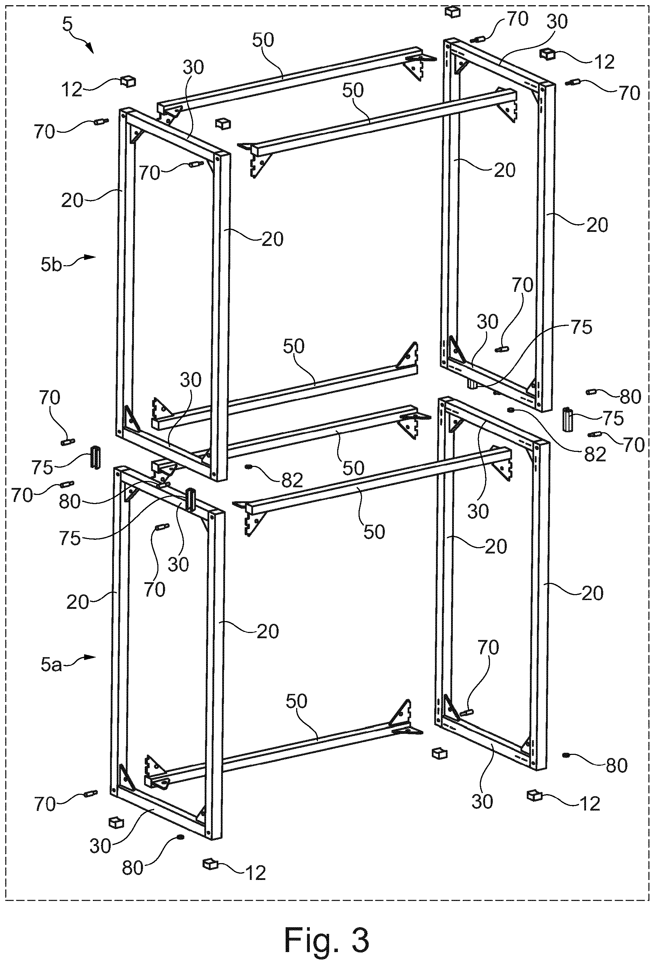

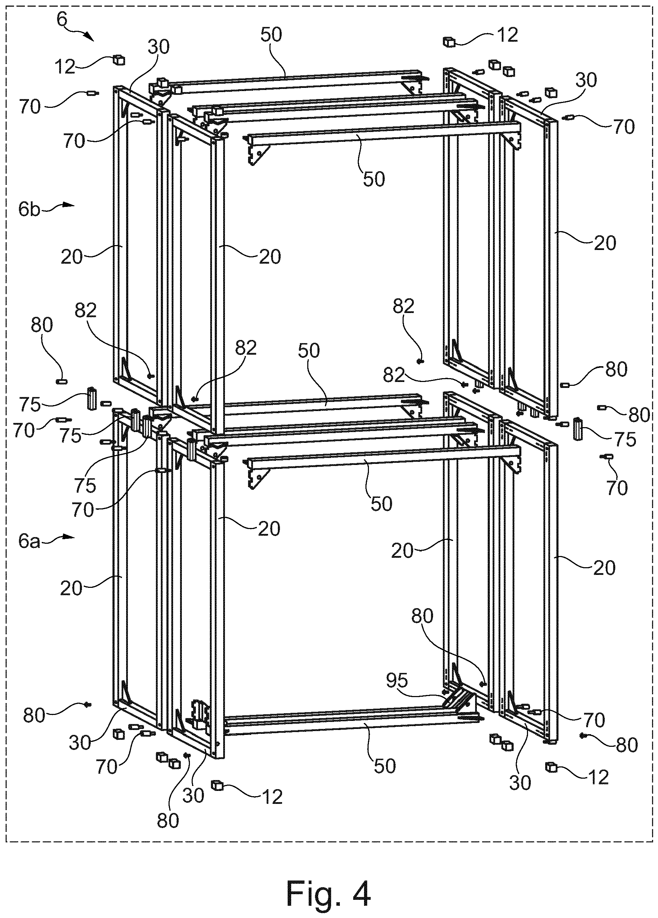

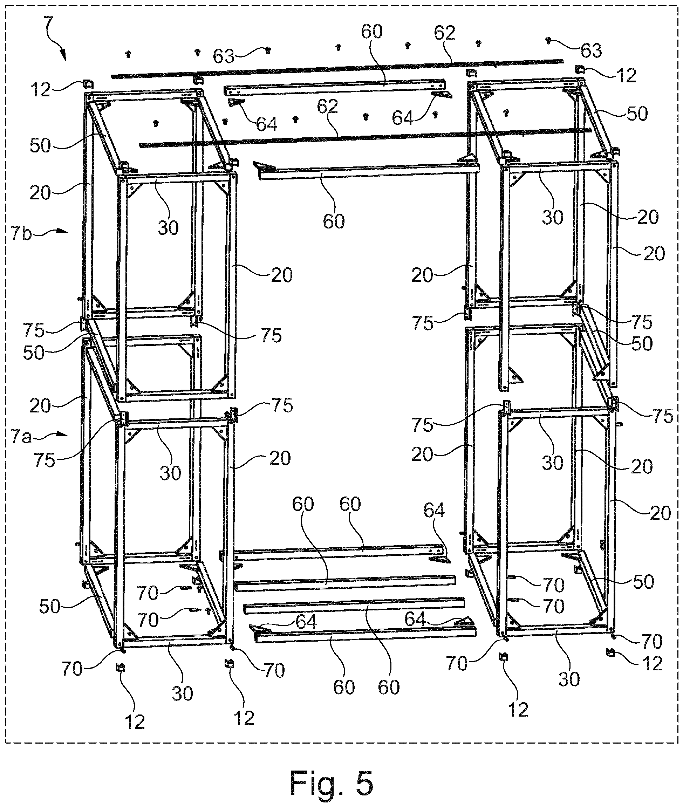

Fig. **3****,** Fig. **4** and Fig. **5** are skeletons of high module assemblies according to the invention seen in perspective in a fold-out illustration.

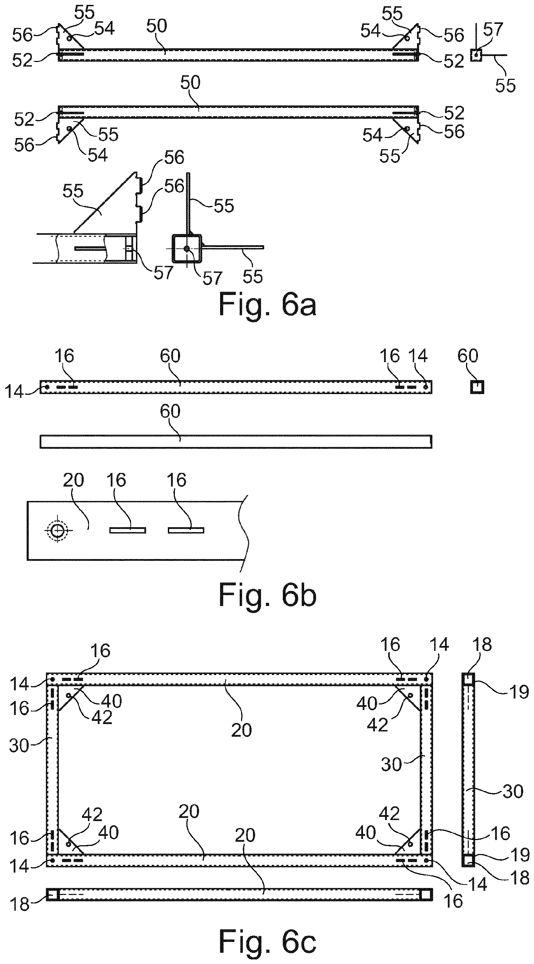

Fig. **6a** is an illustration of squared and elongated connecting rods according to the invention with two angle fittings, both seen from two sides and from an end perspective.
Fig. **6b** is an illustration of interconnecting rods according to the invention without angle fittings, both seen from two sides and from an end perspective.
Fig. **6c** is an illustration of a rectangular frame according to the invention, both seen from two sides and from an end perspective.

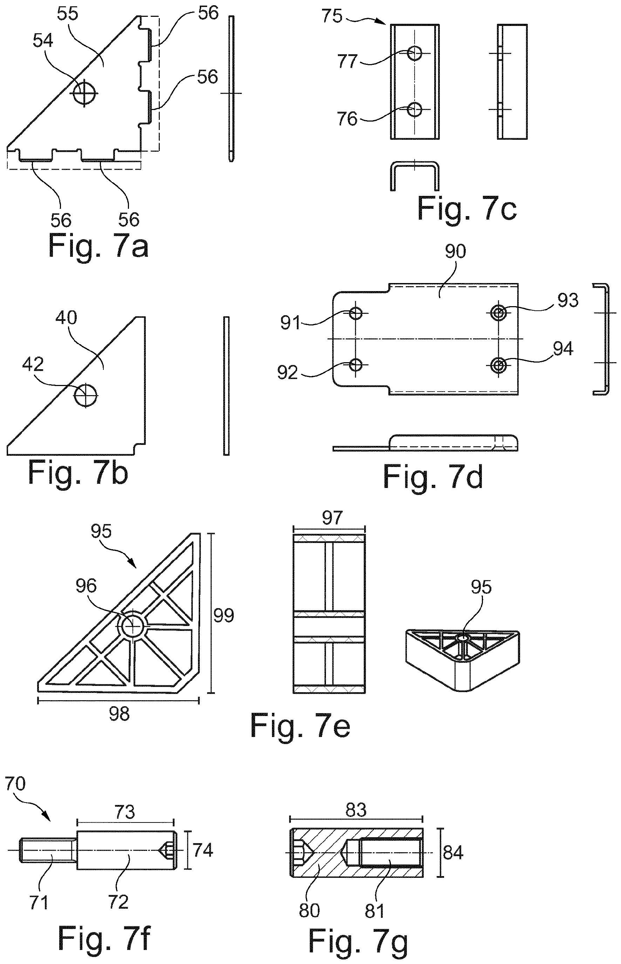

Fig. **7a** is an illustration of an angle fitting with protrusions according to the invention, both seen from a side and end perspective.
Fig. **7b** is an illustration of a triangular frame bracket according to the invention, both seen from a side and end perspective.
Fig. **7c** is an illustration of an inner frame connecting bracket according to the invention, both seen from two sides and end perspective.
Fig. **7d** is an illustration of a frame connecting and stabilizing bracket according to the invention, both seen from two sides and end perspective.
Fig. **7e** is an illustration of a triangular connecting block according to the invention, both seen from two sides and end perspective.
Fig. **7f** **is** an illustration of a frame screw according to the invention.
Fig. **7g** is an illustration of an inner screw member according to the invention.

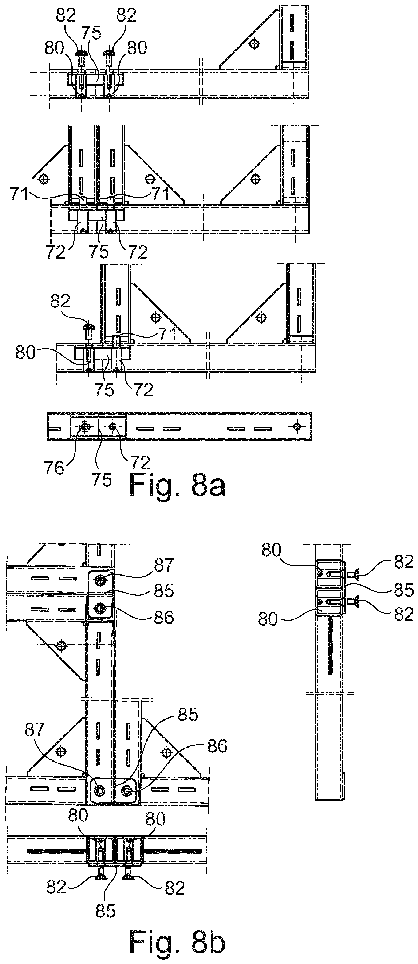

Fig. **8a** is an illustration of an inner bracket assembly, where inner frame connecting brackets are mounted inside the frame with a frame screw and/or an inner screw member according to the invention.
Fig. **8b** is an illustration of an outer bracket assembly, where outer frame connecting brackets are mounted outside the frame with an inner screw member and a corresponding screw according to the invention.

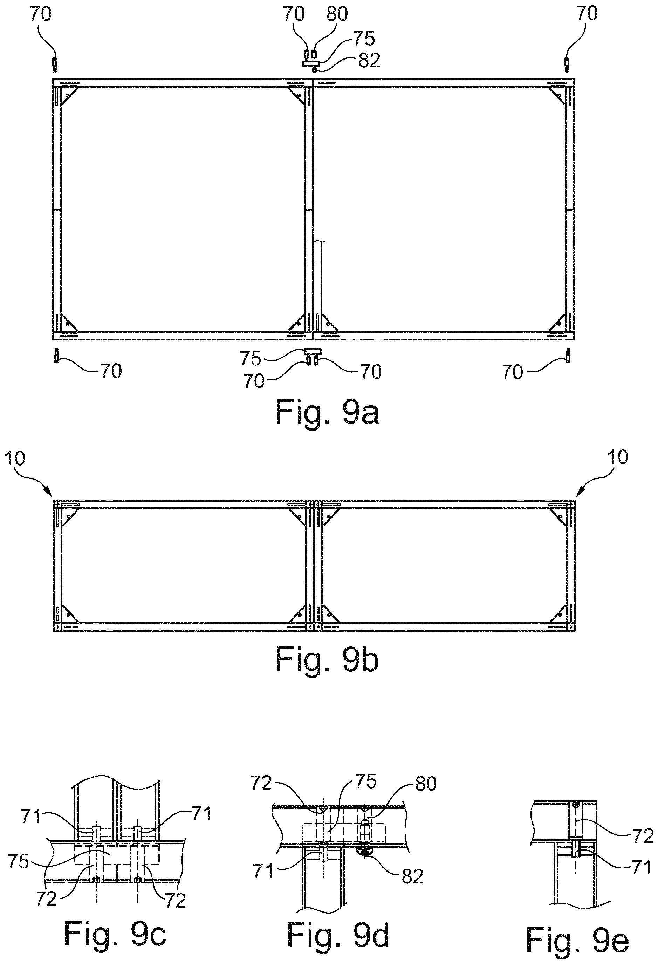

Fig. **9a,** Fig. **9b,** Fig. **9c,** Fig. **9d** illustrate mounting of an inner frame connecting bracket according to the invention in different configurations. Fig. **9a** and Fig. **9e** illustrate mounting of a frame screw according to the invention.

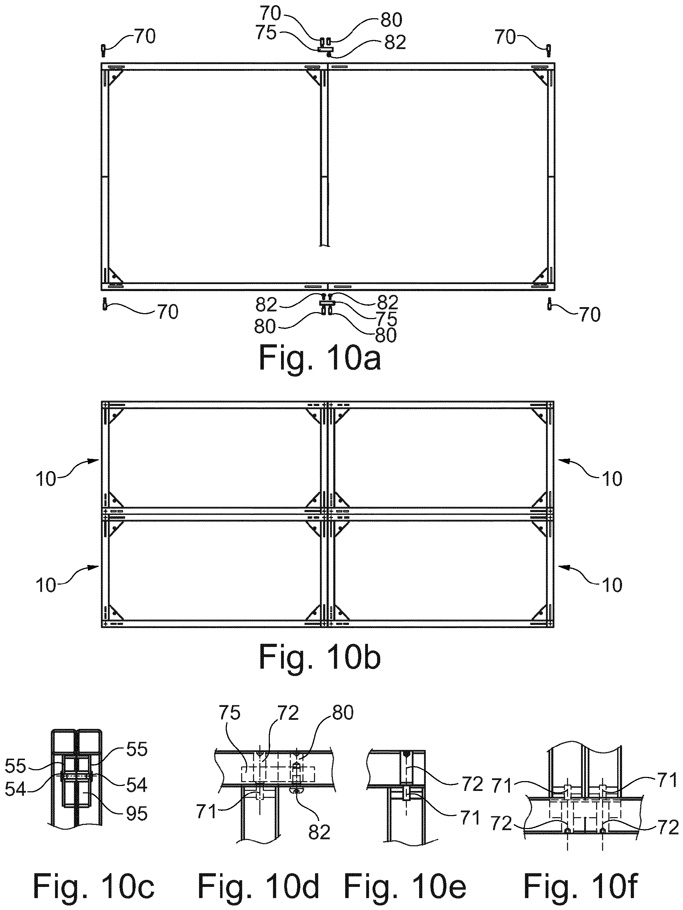

Fig. **10a,** Fig. **10b,** Fig. **10d** and Fig. **10f** illustrate mounting of an inner frame connecting bracket according to the invention in different configurations. Fig. **10a** and Fig. **10e** illustrate mounting of a frame screw according to the invention. Fig. **10c** illustrates mounting of a triangular connecting block according to the invention.

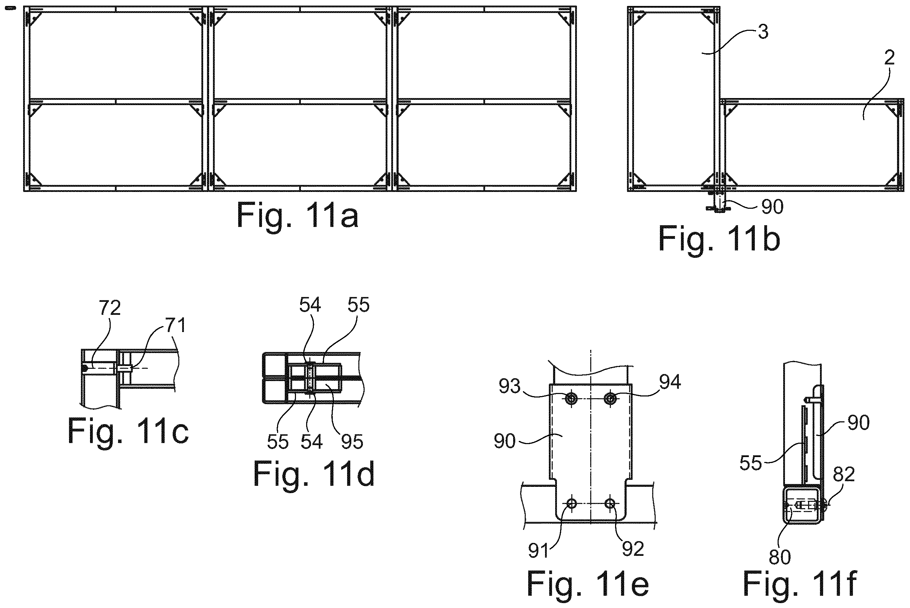

Fig. **11a,** Fig. **11b,** Fig. **11e** and Fig. **11f** illustrate mounting of a frame connecting and stabilizing bracket according to the invention in different configurations. Fig. **11a** and Fig. **11c** illustrate mounting of a frame screw according to the invention.
Fig. **11d** illustrates mounting of a triangular connecting block according to the invention.

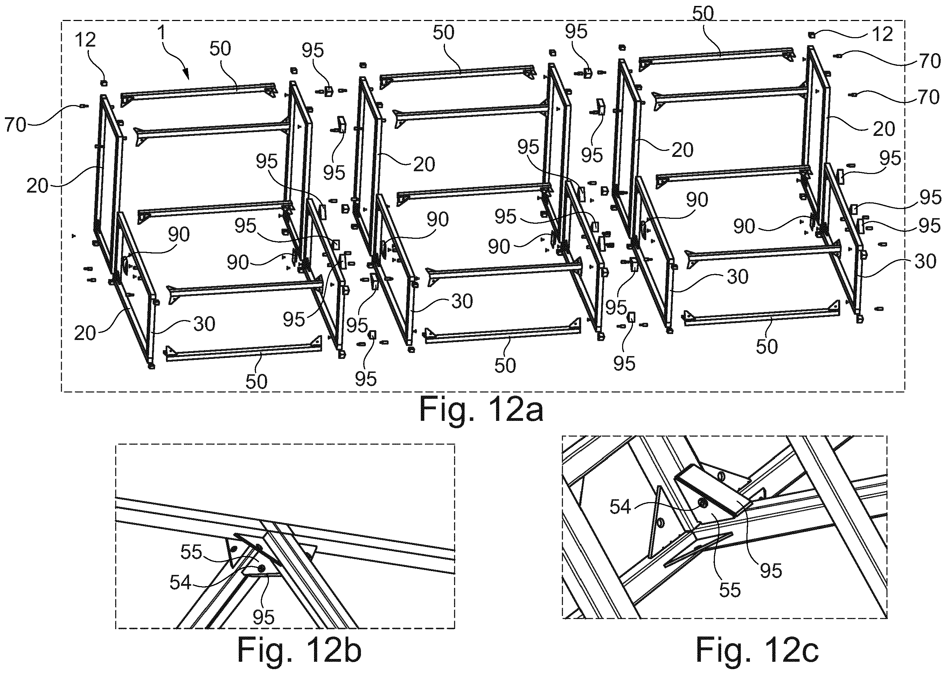

Fig. **12a** is a skeleton of a stair module assembly according to the invention seen in perspective in a fold-out illustration mounted with different means, such as frame connecting and stabilizing brackets and triangular connecting blocks. Fig. **12b** and Fig. **12c** illustrate details of mounted triangular connecting blocks.

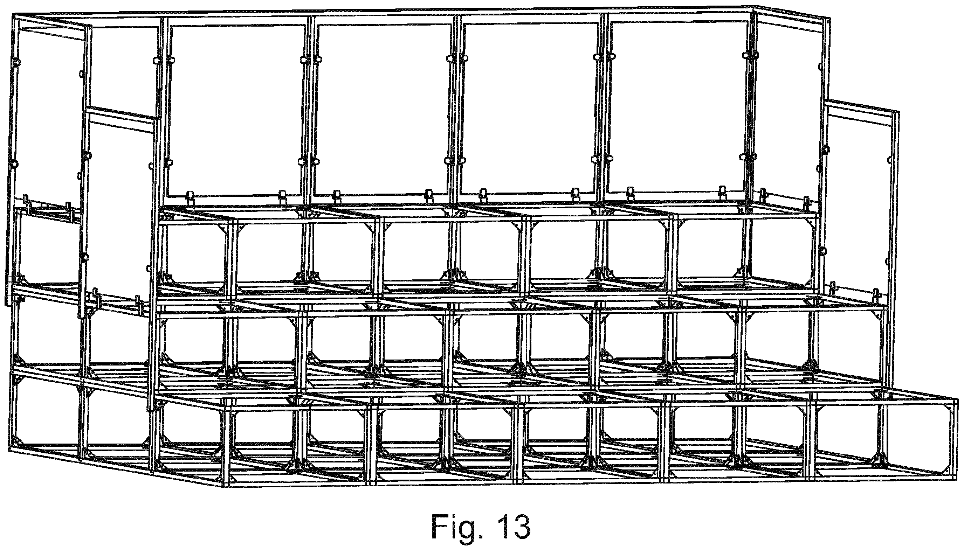

Fig. **13** is a skeleton of a stair module assembly according to the invention seen in perspective in a fold-out illustration mounted with plates to extended frames.

### DETAILED DESCRIPTION

Accordingly, there is provided a furniture module for building of interactive furniture learning module assemblies, comprising
two rectangular frames (10), the frames each including two pair of a first squared and elongated frame rod (20), two pair of a second squared and elongated frame rod (30) having substantially half the length of said first pair of frame rod (20); and
at least three squared and elongated connecting rods (50) having substantially the same length as said first pair of rod (20), each end (52) of said connecting rods (50) being releasably fixed to the two rectangular frames (10) by means of a frame screw (70) inserted through a single fastening point (14) in at least three corners of the two rectangular frames (10), thereby forming a rectangular cuboid module structure, and each upper and lower part of said connecting rods (50) having at least one releasable or integrated angle fitting (55), such as two angle fittings (55), said at least one angle fitting (55) including at least one mounting hole (54) for optional mounting of rectangular plates (9), and said at least one angle fitting (55) including one or more protrusions (56) for attachment to at least one attachment point (16) of the rectangular frames (10), each end (52) of said connecting rods (50) comprises a central female screw thread body (57) for receiving said frame screw (70) through the single fastening point (14) in the at least three corners of the two rectangular frames (10), said frame screw (70) comprising a male thread body (71) for engaging with the female screw thread body (57) and a cylindrical screw head body (72) with a length (73) substantially corresponding to the width of said frames (10) and a diameter (74) operable for said screw head (73) to be stopped within said frames (10), thereby allowing said connecting rods (50) to be fixed to said frames (10),
characterized in that each of the two rectangular frames (10) further includes four triangular frame brackets (40) fixed to both said first (20) and second (30) pair of frame rod in each of the intersecting corners of the frames, thereby forming a rectangular frame structure, said frame brackets (40) including at least one mounting hole (42) for optional mounting of rectangular plates (9).

In one embodiment of the invention, the one or more protrusions (56) of the at least one angle fitting (55) comprises at least two protrusions and is positioned in at least two attachment points (16) of the rectangular frames (10) for stabilizing the module during use.

In one embodiment of the invention, the module comprises three squared and elongated connecting rods. In one embodiment of the invention, the module comprises four squared and elongated connecting rods.

In one embodiment of the invention, each upper and lower part of said connecting rods (50) having at least one angle fitting (55). In one embodiment of the invention, each upper and lower part of said connecting rods (50) having at least two angle fitting (55). In one embodiment of the invention, each upper and lower part of said connecting rods (50) having at least three angle fitting (55).

In another embodiment of the invention, the at least one angle fitting (55) is integrated with the connecting rods (50), such a welded to the connecting rods (50), thereby allowing a furniture module of two rectangular frames (10) and three squared and elongated connecting rods (50) to be assembled with 11 parts and a furniture module of two rectangular frames (10) and four squared and elongated connecting rods (50) to be assembled with 14 parts.

In a further embodiment of the invention, the length (73) of the cylindrical screw head body (72) substantially corresponds to the width of the inner volume (18) of said frames (10), excluding frame walls (19), thereby allowing an inner frame connecting bracket (75) to be mounted and fixed within the inner volume (18) of said frames (10) by said frame screw (70) together with said connecting rods (50). In this embodiment, the screw head may follow the line of the surface of the frame which gives advantages in terms of security during use. Also, the screw as such may be easier mounted in that the frame wall works as a support during mounting.

In general, the frames and connecting rods according to the invention may be made of various materials, such as metal, hard plastic, carbon, or other rigid and withstanding materials. Metal is preferred in the construction. The structure of the rods may be hollow forming a skeleton of the modules with a hollow structure of the individual rods. In some embodiments, the walls of the skeleton, including the connecting rods and frame, is about 2 mm. Generally, the aim is to have the same general thickness in the module in order to benefit from easier mounting of parts in the module and easier mounter of modules to each other. In some other embodiments, the thickness is about 3 mm, in some other 4 mm. The brackets used to mount the modules to each other according to the invention may preferably have the same thickness in order to have them fit into the overall system. Preferably thickness of the brackets is 2 mm.

The rods of the invention generally have four sides with the same dimensions, such as about 30 mm for each outer side with a thickness of 2 mm. In other embodiments, the outer side is about 40 mm, or such as 50 mm, or the like. However, generally the dimensions of the rods are the same in the module in order to match and be mounted to connecting module or neighbor modules.

Preferably, the dimensions of the modules are in a ratio of 2:1:2 (height, width, length). In some embodiments, the height is about 100 cm while the width is about 50 cm and the length is about 100 cm. In some other embodiments, the height is about 90 cm while the width is about 45 cm and the length is about 90 cm. In some embodiments, the height is about 80 cm while the width is about 40 cm and the length is about 80 cm.

When dimensions of the modules are 100 cm height, 50 cm width and 100 cm length, with a frame thickness of 3 cm, the two pair of a first squared and elongated frame rod (20) are generally about 100 cm, the two pair of a second squared and elongated frame rod (30) are generally 44 cm and the at least three squared and elongated connecting rods (50) are 94 cm. Hence, when the two pair of a second squared and elongated frame rod (30) are mentioned to have substantially half the length of said first pair of frame rod (20) according to the invention, the frame may generally be excluded. In that sense, the second squared and elongated frame rod (30) of 44 cm is understood to be about half the length of the two pair of a first squared and elongated frame rod (20). Also, when the at least three squared and elongated connecting rods (50) are mentioned to have substantially the same length as said first pair of rod (20), the frame may generally be excluded. In that sense, the at least three squared and elongated connecting rods (50) of 94 cm is understood to be about the same length of two pair of a first squared and elongated frame rod (20). This calculation also applies then the modules have different dimensions.

The invention also pertains to a furniture module assembly for providing an interactive learning environment, the assembly comprising at least two connected modules. Assemblies may be built of more than two modules depending on the requirements in the learning environment.

In one embodiment of the invention, the assembly includes inner frame connecting brackets (75) partly positioned in the inner volume (18) of the two pair of a first squared and elongated frame rod (20) of one module, and partly positioned in the inner volume (18) of the two pair of a first squared and elongated frame rod (20) of another module, the inner brackets (75) being fixed with the frame screw (70) in a lower end (76) and an upper end (77) to said frame rods (20) and connecting rods (50), or the inner brackets (75) being fixed with an inner female screw cylinder (80) and a corresponding screw (82) in a lower end (76) and/or an upper end (77) to said frame rods (20) in the absence of connecting rods (50), the inner screw member (80) comprising a female screw base (81) and having a length (83) that substantially corresponds to the width of the inner volume (18) of said frames (10), excluding frame walls (19), thereby allowing the inner brackets (75) to be mounted and fixed within the inner volume (18) of said frames (10) by said corresponding screw (82).

In one embodiment of the invention, the assembly includes outer frame connecting brackets (85) partly positioned at the single fastening point (14) of the two pair of a first squared and elongated frame rod (20) of one module, and partly positioned at the single fastening point (14) of the two pair of a first squared and elongated frame rod (20) of another module, the outer frame connecting brackets (85) being fixed with an inner female screw cylinder (80) and a corresponding screw (82) in a lower end (86) and an upper end (87) to said frame rods (20), the inner screw member (80) comprising a female screw base (81) and having a length (83) that substantially corresponds to the width of the inner volume (18) of said frames (10), excluding frame walls (19), thereby allowing the outer brackets (85) to be mounted and fixed on the outside of said frames (10) by said corresponding screw (82).

In one embodiment of the invention, the assembly includes frame connecting and stabilizing brackets (90) partly positioned at the single fastening point (14) of the two pair of a first squared and elongated frame rod (20) of one module, and partly positioned at the single fastening point (14) of the two pair of a first squared and elongated frame rod (20) of another module, the frame connecting and stabilizing brackets (90) being fixed with an inner female screw cylinder (80) and a corresponding screw (82) in a lower end (91) and an upper end (92) to said frame rods (20), and being further fixed to said frames (10) in a distance therefrom that secures stabilization of the at least two connected modules, the inner screw member (80) comprising a female screw base (81) and having a length (83) that substantially corresponds to the width of the inner volume (18) of said frames (10), excluding frame walls (19), thereby allowing the frame connecting and stabilizing brackets (85) to be mounted and fixed on the outside of said frames (10) by said corresponding screw (82).

In one embodiment of the invention, the assembly includes triangular connecting blocks (95) having a thickness (97) and substantially corresponding in length (98) and width (99) to the dimensions of the triangular frame brackets (40) of the rectangular frames (10) and the angle fittings (55) of the connecting rods (50), the triangular connecting blocks (95) being mounted between and fixed to either two of said triangular frame brackets (40) or two of said angle fittings (55) from two different modules.

The various brackets and blocks described above may be used in various assembly configurations, alone or in combination, as it is suitable for flexible construction of assemblies. For instance, the inner frame connecting brackets (75) may be used in combination one or more of the other brackets or blocks as it suits in the particular configuration.

In one embodiment of the invention, inner frame connecting brackets (75) are used in combination with triangular connecting blocks (95). In one embodiment of the invention, inner frame connecting brackets (75) are used in combination with frame connecting and stabilizing brackets (90). In one embodiment of the invention, frame connecting and stabilizing brackets (90) are used in combination with triangular connecting blocks (95).

In one embodiment of the invention, the assembly includes one or more plates (9) either mounted to four of the triangular frame brackets (40) of the rectangular frames (10) and/or mounted to four of the angle fittings (55) of the connecting rods (50).

One of the advantages of the invention, is that the plates (9) may be mounted to both of the triangular frame brackets (40) and angle fittings (55). Hence, only one size of block is required. It is preferred that the triangular frame brackets (40) and angle fittings (55) have substantially the same dimensions. Such plates (9) may be in form of a table plate, sitting plate, stair step plate, side shield plates, or the like. The plates (9) may be of wood, plastic, metal, or any other material that suits the particular use.

In one embodiment of the invention, the assembly is in form of a stair comprising one or more horizontal positioned modules (2) and one or more vertical positioned modules (3), and the assembly further comprising
a plate (9) on top of the one or more horizontal positioned modules (2) as a stair step or seat,
an intermediate stair step or seat (4) that halves the vertical distance relative to said horizontal (2) and vertical (3) modules and
a plate (9) on top of the vertical modules (3) as a table allowing interactive learning from both sides of said table when people are seated on said intermediate stair step or seat (4) on one side of the table and on separate chairs on the other side of the table. Plates (9) may also be positioned in other positions to the modules of the stair.

Importantly, the above described assembly is only one option for configuring a stair. Such a stair may comprise further modules side-by-side and/or may be higher than two modules, such as three or four modules. In some configurations, the modules may also all be horizontal or vertical as suitable for the intended use.

In one embodiment of the invention, the one or more horizontal positioned modules (2) are at least connected to the one or more vertical positioned modules (3) by means of said frame connecting and stabilizing brackets (90), and wherein the one or more horizontal positioned modules (2) and the one or more vertical positioned modules (3) are at least connected sideways by means of said triangular connecting blocks (95).

In one embodiment of the invention, the assembly is in the form of a high module assembly comprising two or more vertical positioned modules on top of each other (5a,5b), and the assembly further comprising
one or more plates (9) flanking at least two sides of the upper of the vertical positioned modules (5b), such as three sides, and
a plate (9) on top of the lower of the vertical positioned modules (5a) as a table.

In one embodiment of the invention, the assembly is in form of a high module assembly comprising at least a set of two or more vertical positioned modules on top of another (6a,6b), each set being connected with front to each other, and the assembly further comprising
one or more plates (9) flanking at least two sides of the upper of the vertical positioned modules (6b), such as three sides, and
a plate (9) on top of the lower of the vertical positioned modules (6a) as a table.

In one embodiment of the invention, the assembly is in form of a high module assembly comprising at least a pair of two or more vertical positioned modules on top of another (7a,7b), each pair being connected with interconnecting rods (60), and the assembly further comprising
one or more plates (9) flanking at least two sides of the upper of the vertical positioned modules (7b), such as three sides, and
a plate (9) in each of the lower of the vertical positioned modules (7a) as a seat.

In one embodiment of the invention, said vertical positioned modules on top of another are at least connected by means of said inner frame connecting brackets (75), and wherein each set of two or more vertical positioned modules on top of another are at least connected sideways by means of said triangular connecting blocks (95).

## Claims

1. A furniture module for building of interactive furniture learning module assemblies, comprising:
two rectangular frames (10), the frames each including two pair of a first squared and elongated frame rod (20), two pair of a second squared and elongated frame rod (30) having substantially half the length of said first pair of frame rod (20); and
at least three squared and elongated connecting rods (50) having substantially the same length as said first pair of rod (20), each end (52) of said connecting rods (50) being releasably fixed to the two rectangular frames (10) by means of a frame screw (70) inserted through a single fastening point (14) in at least three corners of the two rectangular frames (10), thereby forming a rectangular cuboid module structure, and each upper and lower part of said connecting rods (50) having at least one releasable or integrated angle fitting (55), such as two angle fittings (55), said at least one angle fitting (55) including at least one mounting hole (54) for optional mounting of rectangular plates (9), and said at least one angle fitting (55) including one or more protrusions (56) for attachment to at least one attachment point (16) of the rectangular frames (10), each end (52) of said connecting rods (50) comprises a central female screw thread body (57) for receiving said frame screw (70) through the single fastening point (14) in the at least three corners of the two rectangular frames (10), said frame screw (70) comprising a male thread body (71) for engaging with the female screw thread body (57) and a cylindrical screw head body (72) with a length (73) substantially corresponding to the width of said frames (10) and a diameter (74) operable for said screw head (73) to be stopped within said frames (10), thereby allowing said connecting rods (50) to be fixed to said frames (10),
**characterized in that** each of the two rectangular frames (10) further includes four triangular frame brackets (40) fixed to both said first (20) and second (30) pair of frame rod in each of the intersecting corners of the frames, thereby forming a rectangular frame structure, said frame brackets (40) including at least one mounting hole (42) for optional mounting of rectangular plates (9).

2. The furniture module according to claim 1, wherein the one or more protrusions (56) of the at least one angle fitting (55) comprises at least two protrusions and is positioned in at least two attachment points (16) of the rectangular frames (10) for stabilizing the module during use.

3. The furniture module according to any of claims 1-2, wherein the at least one angle fitting (55) is integrated with the connecting rods (50), such a welded to the connecting rods (50), thereby allowing a furniture module of two rectangular frames (10) and three squared and elongated connecting rods (50) to be assembled with 11 parts and a furniture module of two rectangular frames (10) and four squared and elongated connecting rods (50) to be assembled with 14 parts.

4. The furniture module according to any of claims 1-3, wherein the length (73) of the cylindrical screw head body (72) substantially corresponds to the width of the inner volume (18) of said frames (10), excluding frame walls (19), thereby allowing an inner frame connecting bracket (75) to be mounted and fixed within the inner volume (18) of said frames (10) by said frame screw (70) together with said connecting rods (50).

5. A furniture module assembly for providing an interactive learning environment, the assembly comprising at least two connected modules according to any of claims 1-4.

6. The furniture module assembly according to claim 5, wherein the assembly includes inner frame connecting brackets (75) partly positioned in the inner volume (18) of the two pair of a first squared and elongated frame rod (20) of one module, and partly positioned in the inner volume (18) of the two pair of a first squared and elongated frame rod (20) of another module, the inner brackets (75) being fixed with the frame screw (70) in a lower end (76) and an upper end (77) to said frame rods (20) and connecting rods (50), or the inner brackets (75) being fixed with an inner female screw cylinder (80) and a corresponding screw (82) in a lower end (76) and/or an upper end (77) to said frame rods (20) in the absence of connecting rods (50), the inner screw member (80) comprising a female screw base (81) and having a length (83) that substantially corresponds to the width of the inner volume (18) of said frames (10), excluding frame walls (19), thereby allowing the inner brackets (75) to be mounted and fixed within the inner volume (18) of said frames (10) by said corresponding screw (82).

7. The furniture module assembly according to any of claims 5-6, wherein the assembly includes outer frame connecting brackets (85) partly positioned at the single fastening point (14) of the two pair of a first squared and elongated frame rod (20) of one module, and partly positioned at the single fastening point (14) of the two pair of a first squared and elongated frame rod (20) of another module, the outer frame connecting brackets (85) being fixed with an inner female screw cylinder (80) and a corresponding screw (82) in a lower end (86) and an upper end (87) to said frame rods (20), the inner screw member (80) comprising a female screw base (81) and having a length (83) that substantially corresponds to the width of the inner volume (18) of said frames (10), excluding frame walls (19), thereby allowing the outer brackets (85) to be mounted and fixed on the outside of said frames (10) by said corresponding screw (82).

8. The furniture module assembly according to any of claims 5-7, wherein the assembly includes frame connecting and stabilizing brackets (90) partly positioned at the single fastening point (14) of the two pair of a first squared and elongated frame rod (20) of one module, and partly positioned at the single fastening point (14) of the two pair of a first squared and elongated frame rod (20) of another module, the frame connecting and stabilizing brackets (90) being fixed with an inner female screw cylinder (80) and a corresponding screw (82) in a lower end (91) and an upper end (92) to said frame rods (20), and being further fixed to said frames (10) in a distance therefrom that secures stabilization of the at least two connected modules, the inner screw member (80) comprising a female screw base (81) and having a length (83) that substantially corresponds to the width of the inner volume (18) of said frames (10), excluding frame walls (19), thereby allowing the frame connecting and stabilizing brackets (85) to be mounted and fixed on the outside of said frames (10) by said corresponding screw (82).

9. The furniture module assembly according to any of claims 5-8, wherein the assembly includes triangular connecting blocks (95) having a thickness (97) and substantially corresponding in length (98) and width (99) to the dimensions of the triangular frame brackets (40) of the rectangular frames (10) and the angle fittings (55) of the connecting rods (50), the triangular connecting blocks (95) being mounted between and fixed to either two of said triangular frame brackets (40) or two of said angle fittings (55) from two different modules.

10. The furniture module assembly according to any of claims 5-9, wherein the assembly includes one or more plates (9) either mounted to four of the triangular frame brackets (40) of the rectangular frames (10) and/or mounted to four of the angle fittings (55) of the connecting rods (50).

11. The furniture module assembly according to any of claims 5-10 for providing an interactive learning environment, the assembly comprising one or more horizontal positioned modules (2) and one or more vertical positioned modules (3), and the assembly further comprising
a plate (9) on top of the one or more horizontal positioned modules (2) as a stair step or seat,
an intermediate stair step or seat (4) that halves the vertical distance relative to said horizontal (2) and vertical (3) modules and
a plate (9) on top of the vertical modules (3) as a table allowing interactive learning from both sides of said table when people are seated on said intermediate stair step or seat (4) on one side of the table and on separate chairs on the other side of the table.

12. The furniture module assembly according to claim 11, wherein the one or more horizontal positioned modules (2) are at least connected to the one or more vertical positioned modules (3) by means of said frame connecting and stabilizing brackets (90), and wherein the one or more horizontal positioned modules (2) and the one or more vertical positioned modules (3) are at least connected sideways by means of said triangular connecting blocks (95).

13. The furniture module assembly according to any of claims 5-10 for providing an interactive learning environment, the assembly comprising two or more vertical positioned modules on top of each other (5a,5b), and the assembly further comprising
one or more plates (9) flanking at least two sides of the upper of the vertical positioned modules (5b), such as three sides, and
a plate (9) on top of the lower of the vertical positioned modules (5a) as a table.

14. The furniture module assembly according to any of claims 5-10 for providing an interactive learning environment, the assembly comprising at least a set of two or more vertical positioned modules on top of another (6a,6b), each set being connected with front to each other, and the assembly further comprising
one or more plates (9) flanking at least two sides of the upper of the vertical positioned modules (6b), such as three sides, and
a plate (9) on top of the lower of the vertical positioned modules (6a) as a table.

15. The furniture module assembly according to any of claims 5-10 for providing an interactive learning environment, the assembly comprising at least a pair of two or more vertical positioned modules on top of another (7a,7b), each pair being connected with interconnecting rods (60), and the assembly further comprising
one or more plates (9) flanking at least two sides of the upper of the vertical positioned modules (7b), such as three sides, and
a plate (9) in each of the lower of the vertical positioned modules (7a) as a seat.

## Patentansprüche

1. Möbelmodul zum Aufbauen von Möbelanordnungen für interaktives Lernen, umfassend:
zwei rechteckige Rahmen (10), wobei die Rahmen jeweils zwei Paare einer ersten quadratischen und länglichen Rahmenstange (20), zwei Paare einer zweiten quadratischen und länglichen Rahmenstange (30) beinhalten, die im Wesentlichen die Hälfte der Länge des ersten Paares von Rahmenstangen (20) aufweisen; und
mindestens drei quadratische und längliche Verbindungsstangen (50), die im Wesentlichen die gleiche Länge wie das erste Paar von Stangen (20) aufweisen, wobei jedes Ende (52) der Verbindungsstangen (50) lösbar an den zwei rechteckigen Rahmen (10) mittels einer Rahmenschraube (70) befestigt ist, die durch einen einzigen Befestigungspunkt (14) in mindestens drei Ecken der zwei rechteckigen Rahmen (10) eingesetzt ist, wodurch eine rechteckige quaderförmige Modulstruktur gebildet wird, und wobei jeder obere und untere Teil der Verbindungsstangen (50) mindestens eine lösbare oder integrierte Winkelpassung (55), wie beispielsweise zwei Winkelpassungen (55), aufweist, wobei die mindestens eine Winkelpassung (55) mindestens ein Montageloch (54) zur optionalen Montage von rechteckigen Platten (9) beinhaltet, und wobei die mindestens eine Winkelpassung (55) einen oder mehrere Vorsprünge (56) zum Anbringen an mindestens einem Anbringungspunkt (16) der rechteckigen Rahmen (10) beinhaltet, wobei jedes Ende (52) der Verbindungsstangen (50) einen zentralen Innengewindekörper (57) zum Aufnehmen der Rahmenschraube (70) durch den einzelnen Befestigungspunkt (14) in den mindestens drei Ecken der zwei rechteckigen Rahmen (10) umfasst, wobei die Rahmenschraube (70) einen Außengewindekörper (71) zum Eingreifen in den Innengewindekörper (57) und einen zylindrischen Schraubenkopfkörper (72) mit einer Länge (73), die im Wesentlichen der Breite der Rahmen (10) entspricht, und einem Durchmesser (74) umfasst, der für den Schraubenkopf (73) betätigbar ist, um innerhalb der Rahmen (10) arretiert zu werden, wodurch es den Verbindungsstangen (50) ermöglicht wird, an den Rahmen (10) befestigt zu werden,
**dadurch gekennzeichnet, dass** jeder der zwei rechteckigen Rahmen (10) weiter vier dreieckige Rahmenklammern (40) beinhaltet, die sowohl an dem ersten (20) als auch an dem zweiten (30) Paar von Rahmenstangen in jeder der sich kreuzenden Ecken der Rahmen befestigt sind, wodurch eine rechteckige Rahmenstruktur gebildet wird, wobei die Rahmenklammern (40) mindestens ein Montageloch (42) zur optionalen Montage von rechteckigen Platten (9) beinhalten.

2. Möbelmodul nach Anspruch 1, wobei der eine oder die mehreren Vorsprünge (56) der mindestens einen Winkelpassung (55) mindestens zwei Vorsprünge umfassen und in mindestens zwei Anbringungspunkten (16) der rechteckigen Rahmen (10) zur Stabilisierung des Moduls während der Verwendung positioniert sind.

3. Möbelmodul nach einem der Ansprüche 1-2, wobei die mindestens eine Winkelpassung (55) mit den Verbindungsstangen (50) integriert, wie beispielsweise mit den Verbindungsstangen (50) verschweißt ist, wodurch ein Möbelmodul aus zwei rechteckigen Rahmen (10) und drei quadratischen und länglichen Verbindungsstangen (50) mit 11 Teilen zusammengebaut werden kann und ein Möbelmodul aus zwei rechteckigen Rahmen (10) und vier quadratischen und länglichen Verbindungsstangen (50) mit 14 Teilen zusammengebaut werden kann.

4. Möbelmodul nach einem der Ansprüche 1-3, wobei die Länge (73) des zylindrischen Schraubenkopfkörpers (72) im Wesentlichen der Breite des Innenvolumens (18) der Rahmen (10) ausschließlich der Rahmenwände (19) entspricht, wodurch eine innere Rahmenverbindungsklammer (75) innerhalb des Innenvolumens (18) der Rahmen (10) durch die Rahmenschraube (70) zusammen mit den Verbindungsstangen (50) montiert und befestigt werden kann.

5. Möbelmodulanordnung zum Bereitstellen einer interaktiven Lernumgebung, wobei die Anordnung mindestens zwei verbundene Module nach einem der Ansprüche 1-4 umfasst.

6. Möbelmodulanordnung nach Anspruch 5, wobei die Anordnung innere Rahmenverbindungsklammern (75) beinhaltet, die teilweise im Innenvolumen (18) der zwei Paare einer ersten quadratischen und länglichen Rahmenstange (20) eines Moduls positioniert sind, und teilweise im Innenvolumen (18) der zwei Paare einer ersten quadratischen und länglichen Rahmenstange (20) eines anderen Moduls positioniert sind, wobei die inneren Klammern (75) mit der Rahmenschraube (70) in einem unteren Ende (76) und einem oberen Ende (77) an den Rahmenstangen (20) und Verbindungsstangen (50) befestigt sind, oder wobei die inneren Klammern (75) mit einem inneren Innengewindezylinder (80) und einer entsprechenden Schraube (82) in einem unteren Ende (76) und/oder einem oberen Ende (77) an den Rahmenstangen (20) bei Nichtvorhandensein von Verbindungsstangen (50) befestigt sind, wobei das innere Schraubenelement (80) eine Innengewindebasis (81) umfasst und eine Länge (83) aufweist, die im Wesentlichen der Breite des Innenvolumens (18) der Rahmen (10) ausschließlich der Rahmenwände (19) entspricht, wodurch die inneren Klammern (75) im Innenvolumen (18) der Rahmen (10) durch die entsprechende Schraube (82) montiert und befestigt werden können.

7. Möbelmodulanordnung nach einem der Ansprüche 5-6, wobei die Anordnung äußere Rahmenverbindungsklammern (85) beinhaltet, die teilweise an dem einzigen Befestigungspunkt (14) der zwei Paare einer ersten quadratischen und länglichen Rahmenstange (20) eines Moduls positioniert sind, und teilweise an dem einzigen Befestigungspunkt (14) der zwei Paare einer ersten quadratischen und länglichen Rahmenstange (20) eines anderen Moduls positioniert sind, wobei die äußeren Rahmenverbindungsklammern (85) mit einem inneren Innengewindezylinder (80) und einer entsprechenden Schraube (82) in einem unteren Ende (86) und einem oberen Ende (87) an den Rahmenstangen (20) befestigt sind, wobei das innere Schraubenelement (80) eine Innengewindebasis (81) umfasst und eine Länge (83) aufweist, die im Wesentlichen der Breite des Innenvolumens (18) der Rahmen (10) ausschließlich der Rahmenwände (19) entspricht, wodurch die äußeren Klammern (85) an der Außenseite der Rahmen (10) durch die entsprechende Schraube (82) montiert und befestigt werden können.

8. Möbelmodulanordnung nach einem der Ansprüche 5-7, wobei die Anordnung Rahmenverbindungs- und Stabilisierungsklammern (90) beinhaltet, die teilweise an dem einzigen Befestigungspunkt (14) der zwei Paare einer ersten quadratischen und länglichen Rahmenstange (20) eines Moduls positioniert sind, und teilweise an dem einzelnen Befestigungspunkt (14) der zwei Paare einer ersten quadratischen und länglichen Rahmenstange (20) eines anderen Moduls positioniert sind, wobei die Rahmenverbindungs- und Stabilisierungsklammern (90) mit einem inneren Innengewindezylinder (80) und einer entsprechenden Schraube (82) in einem unteren Ende (91) und einem oberen Ende (92) an den Rahmenstangen (20) befestigt sind, und weiter an den Rahmen (10) in einem Abstand von diesen befestigt ist, der die Stabilisierung der mindestens zwei verbundenen Module sicherstellt, wobei das innere Schraubenelement (80) eine Innengewindebasis (81) umfasst und eine Länge (83) aufweist, die im Wesentlichen der Breite des Innenvolumens (18) der Rahmen (10) ausschließlich der Rahmenwände (19) entspricht, wodurch die Rahmenverbindungs- und Stabilisierungsklammern (85) an der Außenseite der Rahmen (10) durch die entsprechende Schraube (82) montiert und befestigt werden können.

9. Möbelmodulanordnung nach einem der Ansprüche 5-8, wobei die Anordnung dreieckige Verbindungsblöcke (95) beinhaltet, die eine Dicke (97) aufweisen und im Wesentlichen in Länge (98) und Breite (99) den Abmessungen der dreieckigen Rahmenklammern (40) der rechteckigen Rahmen (10) und der Winkelpassungen (55) der Verbindungsstangen (50) entsprechen, wobei die dreieckigen Verbindungsblöcke (95) entweder zwischen zwei der dreieckigen Rahmenklammern (40) oder zwei der Winkelpassungen (55) aus zwei verschiedenen Modulen montiert und an diesen befestigt sind.

10. Möbelmodulanordnung nach einem der Ansprüche 5-9, wobei die Anordnung eine oder mehrere Platten (9) beinhaltet, die entweder an vier der dreieckigen Rahmenklammern (40) der rechteckigen Rahmen (10) montiert sind und/oder an vier der Winkelpassungen (55) der Verbindungsstangen (50) montiert sind.

11. Möbelmodulanordnung nach einem der Ansprüche 5-10 zum Bereitstellen einer interaktiven Lernumgebung, wobei die Anordnung ein oder mehrere horizontal positionierte Module (2) und ein oder mehrere vertikal positionierte Module (3) umfasst, und die Anordnung weiter umfasst
eine Platte (9) oben auf dem einen oder den mehreren horizontal positionierten Modulen (2) als Treppenstufe oder Sitz,
eine dazwischenliegende Treppenstufe oder einen Sitz (4), der den vertikalen Abstand zu den horizontalen (2) und vertikalen (3) Modulen halbiert, und
eine Platte (9) oben auf den vertikalen Modulen (3) als Tisch, die interaktives Lernen von beiden Seiten des Tisches aus ermöglicht, wenn Personen auf der dazwischenliegenden Treppenstufe oder dem Sitz (4) auf einer Seite des Tisches und auf getrennten Stühlen auf der anderen Seite des Tisches sitzen.

12. Möbelmodulanordnung nach Anspruch 11, wobei das eine oder die mehreren horizontal positionierten Module (2) zumindest mit dem einen oder den mehreren vertikal positionierten Modulen (3) mittels der den Rahmenverbindungs- und Stabilisierungsklammern (90) verbunden sind, und wobei das eine oder die mehreren horizontal positionierten Module (2) und das eine oder die mehreren vertikal positionierten Module (3) zumindest seitlich mittels der dreieckigen Verbindungsblöcke (95) verbunden sind.

13. Möbelmodulanordnung nach einem der Ansprüche 5-10 zum Bereitstellen einer interaktiven Lernumgebung, wobei die Anordnung zwei oder mehrere vertikal übereinander positionierte Module (5a, 5b) umfasst und die Anordnung weiter umfasst
eine oder mehrere Platten (9), die mindestens zwei Seiten des oberen der vertikal positionierten Module (5b) flankieren, wie beispielsweise drei Seiten, und
eine Platte (9) oben auf dem unteren der vertikal positionierten Module (5a) als Tisch.

14. Möbelmodulanordnung nach einem der Ansprüche 5-10 zum Bereitstellen einer interaktiven Lernumgebung, wobei die Anordnung mindestens einen Satz von zwei oder mehreren vertikal übereinander positionierten Modulen (6a, 6b) umfasst, wobei jeder Satz mit der Vorderseite miteinander verbunden ist, und die Anordnung weiter umfasst
eine oder mehrere Platten (9), die mindestens zwei Seiten des oberen der vertikal positionierten Module (6b) flankieren, wie beispielsweise drei Seiten, und
eine Platte (9) oben auf dem unteren der vertikal positionierten Module (6a) als Tisch.

15. Möbelmodulanordnung nach einem der Ansprüche 5-10 zum Bereitstellen einer interaktiven Lernumgebung, wobei die Anordnung mindestens ein Paar von zwei oder mehreren vertikal übereinander positionierten Modulen (7a, 7b) umfasst, wobei jedes Paar mit Zwischenverbindungsstangen (60) verbunden ist, und die Anordnung weiter umfasst
eine oder mehrere Platten (9), die mindestens zwei Seiten des oberen der vertikal positionierten Module (7b) flankieren, wie beispielsweise drei Seiten, und
eine Platte (9) in jedem der unteren der vertikal positionierten Module (7a) als Sitz.

## Revendications

1. Module de mobilier pour la construction d'ensembles de modules de mobilier pour apprentissage interactif, comprenant :
deux cadres rectangulaires (10), les cadres incluant chacun deux paires d'une première barre de cadre carrée et allongée (20), deux paires d'une seconde barre de cadre carrée et allongée (30) mesurant sensiblement la moitié de la longueur de ladite première paire de barres de cadre (20) ; et
au moins trois barres de liaison carrées et allongées (50) présentant sensiblement la même longueur que ladite première paire de barres (20), chaque extrémité (52) desdites barres de liaison (50) étant fixée de manière amovible aux deux cadres rectangulaires (10) au moyen d'une vis de cadre (70) insérée à travers un point de fixation unique (14) dans au moins trois coins des deux cadres rectangulaires (10), formant ainsi une structure de module cuboïde rectangulaire, et chaque partie supérieure et inférieure desdites barres de liaison (50) présentant au moins une ferrure d'angle amovible ou intégrée (55), telle que deux ferrures d'angle (55), ladite au moins une ferrure d'angle (55) incluant au moins un trou de montage (54) pour le montage facultatif de plaques rectangulaires (9), et ladite au moins une ferrure d'angle (55) incluant une ou plusieurs saillies (56) pour une fixation à au moins un point de fixation (16) des cadres rectangulaires (10), chaque extrémité (52) desdites barres de liaison (50) comprend un corps à filetage femelle central (57) destiné à recevoir ladite vis de cadre (70) à travers le point de fixation unique (14) dans les au moins trois coins des deux cadres rectangulaires (10), ladite vis de cadre (70) comprenant un corps à filetage mâle (71) destiné à venir en prise avec le corps à filetage femelle (57) et un corps à tête de vis cylindrique (72) d'une longueur (73) correspondant sensiblement à la largeur desdits cadres (10) et d'un diamètre (74) utilisable pour que ladite tête de vis (73) soit arrêtée à l'intérieur desdits cadres (10), permettant ainsi de fixer lesdites barres de liaison (50) auxdits cadres (10),
**caractérisé en ce que** chacun des deux cadres rectangulaires (10) inclut en outre quatre équerres de cadre triangulaires (40) fixées à la fois à ladite première paire (20) et à ladite seconde paire (30) de barres de cadre dans chacun des coins d'intersection des cadres, formant ainsi une structure de cadre rectangulaire, lesdites équerres de cadre (40) incluant au moins un trou de montage (42) pour le montage facultatif de plaques rectangulaires (9).

2. Module de mobilier selon la revendication 1, dans lequel les une ou plusieurs saillies (56) de la au moins une ferrure d'angle (55) comprennent au moins deux saillies et sont positionnées dans au moins deux points de fixation (16) des cadres rectangulaires (10) pour stabiliser le module pendant son utilisation.

3. Module de mobilier selon l'une quelconque des revendications 1-2, dans lequel la au moins une ferrure d'angle (55) est intégrée aux barres de liaison (50), par exemple soudée aux barres de liaison (50), permettant ainsi à un module de mobilier de deux cadres rectangulaires (10) et trois barres de liaison carrées et allongées (50) d'être assemblé avec 11 pièces et à un module de mobilier de deux cadres rectangulaires (10) et quatre barres de liaison carrées et allongées (50) d'être assemblé avec 14 pièces.

4. Module de mobilier selon l'une quelconque des revendications 1-3, dans lequel la longueur (73) du corps à tête de vis cylindrique (72) correspond sensiblement à la largeur du volume intérieur (18) desdits cadres (10), à l'exclusion de parois de cadre (19), permettant ainsi à un support de liaison de cadre intérieur (75) d'être monté et fixé dans le volume intérieur (18) desdits cadres (10) par ladite vis de cadre (70) conjointement avec lesdites barres de liaison (50).

5. Ensemble de modules de mobilier pour fournir un environnement d'apprentissage interactif, l'ensemble comprenant au moins deux modules liés selon l'une quelconque des revendications 1-4.

6. Ensemble de modules de mobilier selon la revendication 5, dans lequel l'ensemble inclut des supports de liaison de cadre intérieurs (75) positionnés en partie dans le volume intérieur (18) des deux paires d'une première barre de cadre carrée et allongée (20) d'un module, et positionnés en partie dans le volume intérieur (18) des deux paires d'une première barre de cadre carrée et allongée (20) d'un autre module, les supports intérieurs (75) étant fixés avec la vis de cadre (70) dans une extrémité inférieure (76) et une extrémité supérieure (77) auxdites barres de cadre (20) et barres de liaison (50), ou les supports intérieurs (75) étant fixés avec un cylindre à vis femelle intérieur (80) et une vis correspondante (82) dans une extrémité inférieure (76) et/ou une extrémité supérieure (77) auxdites barres de cadre (20) en l'absence de barres de liaison (50), l'élément de vis intérieur (80) comprenant une base de vis femelle (81) et présentant une longueur (83) qui correspond sensiblement à la largeur du volume intérieur (18) desdits cadres (10), à l'exclusion de parois de cadre (19), permettant ainsi aux supports intérieurs (75) d'être montés et fixés à l'intérieur du volume intérieur (18) desdits cadres (10) par ladite vis correspondante (82).

7. Ensemble de modules de mobilier selon l'une quelconque des revendications 5-6, dans lequel l'ensemble inclut des supports de liaison de cadre extérieurs (85) positionnés en partie au niveau du point de fixation unique (14) des deux paires d'une première barre de cadre carrée et allongée (20) d'un module, et positionnés en partie au niveau du point de fixation unique (14) des deux paires d'une première barre de cadre carrée et allongée (20) d'un autre module, les supports de liaison de cadre extérieurs (85) étant fixés avec un cylindre à vis femelle intérieur (80) et une vis correspondante (82) dans une extrémité inférieure (86) et une extrémité supérieure (87) auxdites barres de cadre (20), l'élément de vis intérieur (80) comprenant une base de vis femelle (81) et présentant une longueur (83) qui correspond sensiblement à la largeur du volume intérieur (18) desdits cadres (10), à l'exclusion de parois de cadre (19), permettant ainsi aux supports extérieurs (85) d'être montés et fixés à l'extérieur desdits cadres (10) par ladite vis correspondante (82).

8. Ensemble de modules de mobilier selon l'une quelconque des revendications 5-7, dans lequel l'ensemble inclut des supports de liaison et de stabilisation de cadre (90) positionnés en partie au niveau du point de fixation unique (14) des deux paires d'une première barre de cadre carrée et allongée (20) d'un module, et positionnés en partie au niveau du point de fixation unique (14) des deux paires d'une première barre de cadre carrée et allongée (20) d'un autre module, les supports de liaison et de stabilisation de cadre (90) étant fixés avec un cylindre à vis femelle intérieur (80) et une vis correspondante (82) dans une extrémité inférieure (91) et une extrémité supérieure (92) auxdites barres de cadre (20), et étant en outre fixés auxdits cadres (10) à une distance de ceux-ci qui assure la stabilisation des au moins deux modules liés, l'élément de vis intérieur (80) comprenant une base de vis femelle (81) et présentant une longueur (83) qui correspond sensiblement à la largeur du volume intérieur (18) desdits cadres (10), à l'exclusion de parois de cadre (19), permettant ainsi aux supports de liaison et de stabilisation de cadre (85) d'être montés et fixés sur l'extérieur desdits cadres (10) par ladite vis correspondante (82).

9. Ensemble de modules de mobilier selon l'une quelconque des revendications 5-8, dans lequel l'ensemble inclut des blocs de liaison triangulaires (95) présentant une épaisseur (97) et correspondant sensiblement en longueur (98) et en largeur (99) aux dimensions des équerres de cadre triangulaires (40) des cadres rectangulaires (10) et aux ferrures d'angle (55) des barres de liaison (50), les blocs de liaison triangulaires (95) étant montés entre et fixés soit à deux desdites équerres de cadre triangulaires (40), soit à deux desdites ferrures d'angle (55) à partir de deux modules différents.

10. Ensemble de modules de mobilier selon l'une quelconque des revendications 5-9, dans lequel l'ensemble inclut une ou plusieurs plaques (9) montées sur les unes et/ou les autres de quatre des équerres de cadre triangulaires (40) des cadres rectangulaires (10) et de quatre des ferrures d'angle (55) des barres de liaison (50).

11. Ensemble de modules de mobilier selon l'une quelconque des revendications 5-10 pour fournir un environnement d'apprentissage interactif, l'ensemble comprenant un ou plusieurs modules positionnés horizontalement (2) et un ou plusieurs modules positionnés verticalement (3), et l'ensemble comprenant en outre
une plaque (9) au-dessus des un ou plusieurs modules positionnés horizontalement (2) servant de marche d'escalier ou d'assise,
une marche d'escalier ou une assise intermédiaire (4) qui divise par deux la distance verticale par rapport auxdits modules horizontaux (2) et verticaux (3) et
une plaque (9) au-dessus des modules verticaux (3) servant de table permettant un apprentissage interactif des deux côtés de ladite table lorsque des personnes sont assises sur ladite marche d'escalier ou ladite assise intermédiaire (4) d'un côté de la table et sur des chaises séparées de l'autre côté de la table.

12. Ensemble de modules de mobilier selon la revendication 11, dans lequel les un ou plusieurs modules positionnés horizontalement (2) sont au moins reliés aux un ou plusieurs modules positionnés verticalement (3) au moyen desdits supports de liaison et de stabilisation de cadre (90), et dans lequel les un ou plusieurs modules positionnés horizontalement (2) et les un ou plusieurs modules positionnés verticalement (3) sont reliés au moins latéralement au moyen desdits blocs de liaison triangulaires (95).

13. Ensemble de modules de mobilier selon l'une quelconque des revendications 5-10 pour fournir un environnement d'apprentissage interactif, l'ensemble comprenant deux modules positionnés verticalement (5a, 5b) ou plus les uns sur les autres, et l'ensemble comprenant en outre
une ou plusieurs plaques (9) flanquant au moins deux côtés du module supérieur des modules positionnés verticalement (5b), par exemple trois côtés, et
une plaque (9) au-dessus du module inférieur des modules positionnés verticalement (5a) servant de table.

14. Ensemble de modules de mobilier selon l'une quelconque des revendications 5-10 pour fournir un environnement d'apprentissage interactif, l'ensemble comprenant au moins un jeu de deux modules positionnés verticalement (6a, 6b) ou plus les uns sur les autres, chaque jeu étant relié l'un à l'autre par la face avant, et l'ensemble comprenant en outre
une ou plusieurs plaques (9) flanquant au moins deux côtés du module supérieur des modules positionnés verticalement (6b), par exemple trois côtés, et
une plaque (9) au-dessus du module inférieur des modules positionnés verticalement (6a) servant de table.

15. Ensemble de modules de mobilier selon l'une quelconque des revendications 5-10 pour fournir un environnement d'apprentissage interactif, l'ensemble comprenant au moins une paire de deux modules positionnés verticalement (7a, 7b) ou plus les uns sur les autres, chaque paire étant reliée par des barres de liaison (60), et l'ensemble comprenant en outre
une ou plusieurs plaques (9) flanquant au moins deux côtés du module supérieur des modules positionnés verticalement (7b), par exemple trois côtés, et
une plaque (9) dans chacun du module inférieur des modules positionnés verticalement (7a) servant de siège.
